(19) Europäisches Patentamt
European Patent Office
Office européen des brevets

(11) Publication number: **0 116 649 B1**

(12) **EUROPEAN PATENT SPECIFICATION**

(45) Date of publication of patent specification: **15.06.88**

(51) Int. Cl.[4]: **H 02 K 1/18**

(21) Application number: **83902694.5**

(22) Date of filing: **24.08.83**

(86) International application number: **PCT/JP83/00275**

(87) International publication number: **WO 84/01061 15.03.84 Gazette 84/07**

# (54) METHOD FOR MANUFACTURING A STATOR FOR MOTORS.

(30) Priority: **26.08.82 JP 146797/82**

(43) Date of publication of application: **29.08.84 Bulletin 84/35**

(45) Publication of the grant of the patent: **15.06.88 Bulletin 88/24**

(84) Designated Contracting States: **DE FR GB**

(56) References cited:
**DE-C- 824 077**
**DE-U-1 920 447**
**JP-A-12 000 671**
**JP-A-53 064 703**
**JP-U-55 012 754**
**US-A-1 822 096**
**US-A-4 306 168**

(73) Proprietor: **FANUC LTD**
**3580, Shibokusa Aza-Komanba Oshino-mura**
**Minamitsuru-gun Yamanashi 401-05 (JP)**

(72) Inventor: **KAWADA, Shigeki**
**346-15, Shimoda Hino-shi**
**Tokyo 191 (JP)**
Inventor: **AMEMIYA, Yoichi**
**1019-357, Nishiterakata-cho**
**Hachioji-shi Tokyo 192-01 (JP)**
Inventor: **SOGABE, Masatoyo**
**5-20-6, Sanda-cho Hachioji-shi**
**Tokyo 193 (JP)**
Inventor: **IWAMATSU, Noboru**
**3-27, Tamadaira Hino-shi**
**Tokyo 191 (JP)**

(74) Representative: **Blumbach Weser Bergen**
**Kramer Zwirner Hoffmann Patentanwälte**
**Radeckestrasse 43**
**D-8000 München 60 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a method of manufacturing a stator of a motor having a stator core consisting of laminated magnetic core sheets.

A stator manufactured in accordance with the pre-characterizing part of claim 1 is disclosed in GB—A—13 37 627. In this prior art stator the laminations of the stator core comprise bores in the neighbourhood of the back of the core. Each bore receives a bolt, which serves to hold the laminations of the core between two pressure plates. The bolts are a force fit with corresponding bores within the pressure plates. One may consider bolts of the prior art stator as reinforcing bars. Each end face of each reinforcing bar comprises an internal thread into which a tap bolt is screwed. The head of the tap bolt acts on the outer surface of a corresponding pressure plate. Due to this structure, the laminates of the stator core are held fast between the two pressure plates.

In a synchronous motor used as a servomotor, a stator is made of a stator core consisting of laminated magnetic steel sheets. The stator core is generally constructed to be accommodated in a casing. This construction obstructs heat radiation at the stator core portion. Also, it is not necessarily fully sufficient from the standpoint of compactness of the motor and reduction of manufacturing costs.

The object of the present invention is, in view of the aforementioned problems, to improve the heat radiation action of the stator core portion and also to reduce the size of the motor and cut manufacturing costs.

This object is achieved in a method of the above mentioned type by the fact that the through holes are bored in such a manner that cuts are constituted for forming cut openings to the outside of the stator core and that the reinforcing bars are fixed to the stator core by welds which seal the cut openings (characterizing part of claim 1).

Providing welds in a stator core is already known from US—A—18 22 096. However, this patent is mainly concerned with a motor frame construction which includes a stack of stator laminations. Bars are positioned on the outer periphery of the stator completely outside the boundary thereof. The bars are connected to the stator by welding. Therefore, the welds known from this prior art are different from the welds provided by the present invention in connection with the reinforcing bars.

Figure 1 is a cross-sectional view of a stator of a motor of a preferred embodiment according to the present invention;

Fig. 2 is a cross-sectional view of Fig. 1 taken along the line II—II;

Fig. 3 is a partial enlarged view of Fig. 2;

Figs. 4 and 5 are views of further examples of a structure fixing a stator core, a front bracket, and a rear bracket.

A stator of a motor of an embodiment of the present invention is shown in Fig. 1. A cross-sectional view of Fig. 1 taken along the line II—II is shown in Fig. 2, and a partial enlarged view of Fig. 2 is shown in Fig. 3. The stator ST of the motor of Fig. 1 comprises: a stator core 1 consisting of laminated magnetic steel plates and having a slot 1S which accommodates the windings; a front bracket 31 and a rear bracket 32 which sandwich the stator core 1 from both sides; a bearing 41 mounted on the front bracket 31 for supporting a rotor shaft; and a bearing 42 mounted in the rear bracket 32 for supporting the rotor shaft.

In the stator ST of Fig. 1, a plurality of through holes 11, 12, 13 . . . are bored at selected portions (Fig. 2) of the stator core. Reinforcing bars 51, 52, 53 . . . are inserted into said through holes 11, 12, 13 . . . Coupling bolts 61, 62, 63 . . . of the rear bracket are screwed to internal threads of said reinforcing bars 51, 52, 53 . . . through holes 321, 322, 323 . . . bored in the rear bracket 32, while coupling bolts 91, 92, 93 . . . of the front bracket are screwed to internal threads of the reinforcing bars 51, 52, 53 . . . through through holes 311, 312, 313 . . . bored in the front bracket 31. Thereafter, the stator core 1 is tightly fixed between the front bracket 31 and rear bracket 32.

In the selection of the position of the through holes in the stator core, it is possible to select various positions, but, as shown in Fig. 2, when through holes are formed by being cut in from outward at the circumference of the stator core, it is preferable to insert the reinforcing bars 51, 52, 53 . . . and then seal the circumferential openings using welds 81, 82, 83 . . . (Fig. 3).

Also, in the selection of the position of through holes in the stator core, when the shape of the magnetic steel sheet is polygonal as shown in Fig. 2, it is possible to bore through holes at the corners of the polygons.

Also, in order to improve the heat radiation action in the stator core, as shown in Fig. 2, for instance, by broken lines in only one side, an uneven structure 1F for heat radiation may be arranged at each side portion of laminated core.

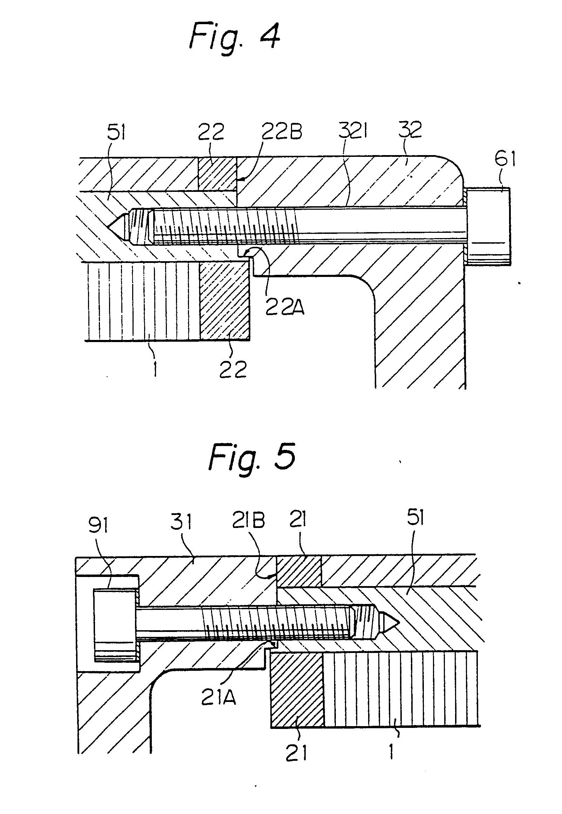

In place of a structure where the stator core is sandwiched between front and rear brackets, as shown in Fig. 4 and Fig. 5, end plates 21 and 22 may be fitted on to the front and rear ends of the stator core, machined fit-structures 21A, 22A and butt-joint structures 21B, 22B may be arranged in order to couple said end plates and said front and rear brackets with the fitting portion of said end plates, said front, and rear bracket to help the positioning for coupling with end plates and front and rear brackets.

List of reference numerals and corresponding items

| | |
|---|---|
| 1 | stator core |
| 11—13 | through holes |
| 1S | slot |
| 1F | uneven structure |
| 21, 22 | end plates |
| 21A, 22A | fitting portions |

| | |
|---|---|
| 21B, 22B | butt-joint portions |
| 31 | front bracket |
| 32 | rear bracket |
| 311—313 | internal threads |
| 321—323 | through holes |
| 41, 42 | bearing |
| 51—53 | reinforcing bars |
| 61—63 | rear side tap bolts |
| 81—83 | welded portions |
| 91—93 | front side tap bolts |

**Claims**

1. A method of manufacturing a stator of a motor having a stator core (1) consisting of laminated magnetic core sheets, comprising the features:

through holes (11—13) are bored at predetermined positions of the stator core along the circumference of the stator core (1),

reinforcing bars (51—53) are inserted into said through holes,

said stator core (1) is supported between a front bracket (31) and a rear bracket (32) and

tap bolts (61 . . . 63; 91 . . . 93) penetrate said front bracket and said rear bracket (31, 32), and are screwed with internal threads (311 . . . 313) at the end of said reinforcing bars (51 . . . 53), thereby fixing in place said stator core (1), said front bracket, and said rear bracket (31, 32),

characterized in that said through holes (11—13) are bored in such a manner that cuts are constituted for forming cut openings to the outside of the stator core (1) and that said reinforcing bars (51—53) are fixed to the stator core (1) by welds (81, 82, 83) which seal the cut openings.

2. A method according to claim 1, wherein end plates (21, 22) are arranged at the end portion of said stator core (1) to form a fitting structure (21A, 22A) and butt joint structure (21B, 22B) between said end plates (21, 22) and said front and rear brackets.

3. A method according to claim 1, wherein said magnetic core sheets are shaped to form polygons and the positions of said through holes (11—13) are positioned at the corners of said polygons.

4. A method according to claim 1, wherein an uneven structure is formed on the side surface of said stator core (1) to facilitate heat radiation.

**Patentansprüche**

1. Verfahren zum Herstellen eines Stators eines Motors mit einem aus geschichteten Magnetkernblechen bestehenden Statorkern (1), umfassend folgende Merkmale:

an vorbestimmten Stellen des Statorkerns werden entlang dem Umfang des Statorkerns (1) Durchgangslöcher (11—13) gebohrt,

in die Durchgangslöcher werden Verstärkungsstangen (51—53) eingesetzt,

der Statorkern (1) wird zwischen einem vorderen Träger (31) und einem hinteren Träger (32) gelagert, und

Gewindebolzen (61 . . . 63; 91 . . . 93) durchdringen den vorderen Träger und den hinteren Träger (31, 32) und sind mit Innengewinden (311 . . . 313) am Ende der Verstärkungsstangen (51 . . . 53) verschraubt, um dadurch den Statorkern (1), den vorderen Träger und den hinteren Träger (31, 32) örtlich festzulegen,

dadurch gekennzeichnet, daß die Durchgangslöcher (11—13) derart gebohrt werden, daß Einschnitte entstehen, um Einschnittöffnungen zur Außenseite des Statorkerns (1) hin zu bilden, und daß die Verstärkungsstangen (51—53) durch die Einschnittöffnungen abdichtende Schweißungen (81, 82, 83) an dem Statorkern (1) fixiert werden.

2. Verfahren nach Anspruch 1, bei dem an dem Endabschnitt des Statorkerns (1) Endplatten (21, 22) angeordnet werden, um zwischen den Endeplatten (21, 22) und dem vorderen und dem hinteren Träger eine Passungsstruktur (21A, 22A) und eine Stumpfstoß-Struktur (21B, 22B) zu bilden.

3. Verfahren nach Anspruch 1, dadurch gekennzeichnet, daß die Magnetkernbleche so gestaltet sind, daß Polygone gebildet werden, und die Positionen der Durchgangslöcher (11—13) sich an den Ecken der Polygone befinden.

4. Verfahren nach Anspruch 1, bei dem auf der Seitenfläche des Statorkerns (1) zur Erleichterung der Wärmeabstrahlung eine unebene Struktur ausgebildet wird.

**Revendications**

1. Procédé pour fabriquer le stator d'un moteur comportant un noyeau statorique (1) constitué de tôles magnétiques de noyau empilées comprenant les étapes suivantes:

—on perce des trous de passage (11—13) en des positions prédéterminées du noyau statorique le long de la circonférence du noyau statorique (1);

—on insère des barres de renfort (51—53) dans les trous de passage;

—on supporte le noyau statorique (1) entre un flasque avant (31) et un flasque arrière (32); et

—on engage des vis de fixation (61 . . . 63; 91 . . . 93) à travers le flasque avant et le flasque arrière (31, 32) et on les visse dans des filetages internes (311 . . . 313) à l'extrémité des barres de renfort (51 . . . 53), ce qui fixe à leur place le noyau statorique (1), le flasque avant et le flasque arrière (31, 32),

caractérisé en ce que l'on perce les trous de passage (11—13) de façon à réaliser des découpes présentant des ouvertures vers l'extérieur du noyau statorique (1), et en ce qu'on fixe les barres de renfort (51—53) au noyau statorique (1) par des soudures (81, 82, 83) qui ferment les ouverture des découpes.

2. Procédé conforme à la revendication 1, dans lequel on dispose des plaques d'extrémite (21, 22) aux parties d'extrémité du noyau statorique (1) pour constituer une structure de positionnement (21A, 22A) et une structure d'assemblage bout à bout (21B, 22B) entre les plaques d'extrémité (21, 22) et les flasques avant et arrière.

3. Procédé conforme à la revendication 1, dans lequel on réalise les tôles magnétiques du noyau en forme de polygones, et on place les trous de passage (11—13) aux coins desdits polygones.

4. Procédé conforme à la revendication 1, dans lequel on forme une structure irrégulière à la surface latérale du noyau statorique (1) pour favoriser le rayonnement thermique.

Fig. 1

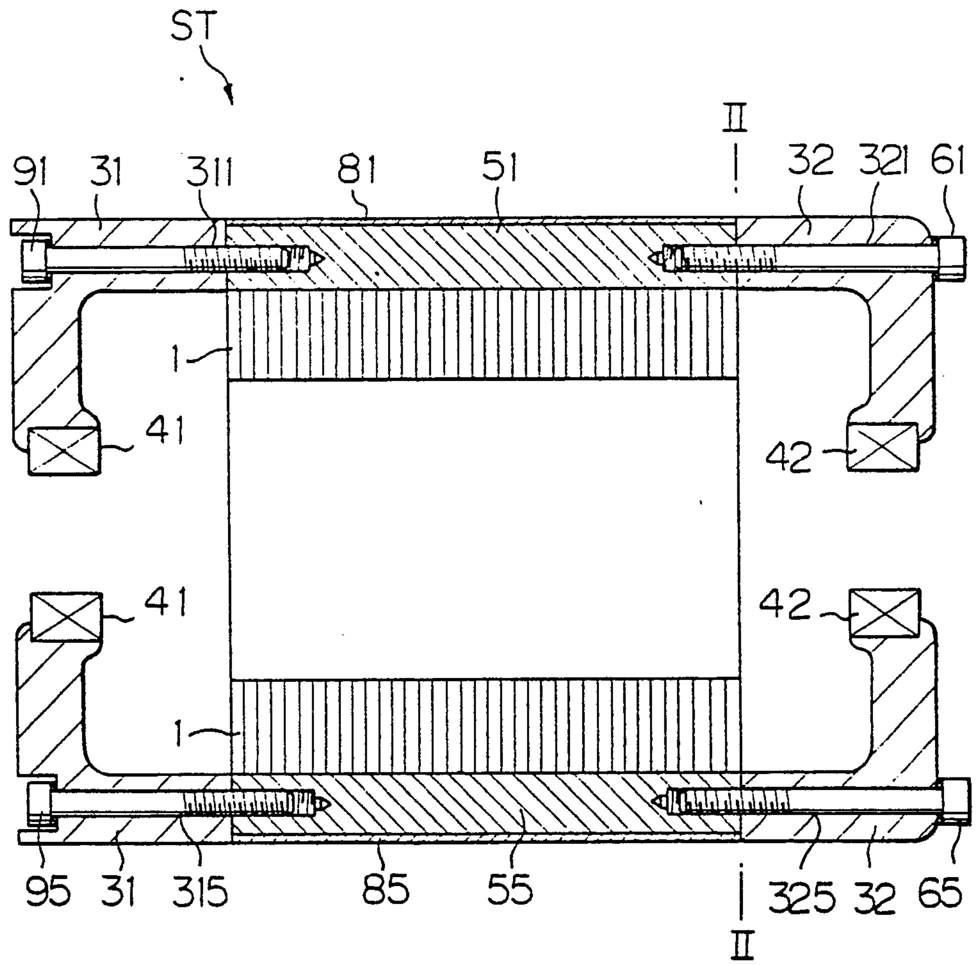
ST
II
91 31 311 81 51 32 321 61
1
41
42
41
42
1
95 31 315 85 55 325 32 65
II

Fig. 2

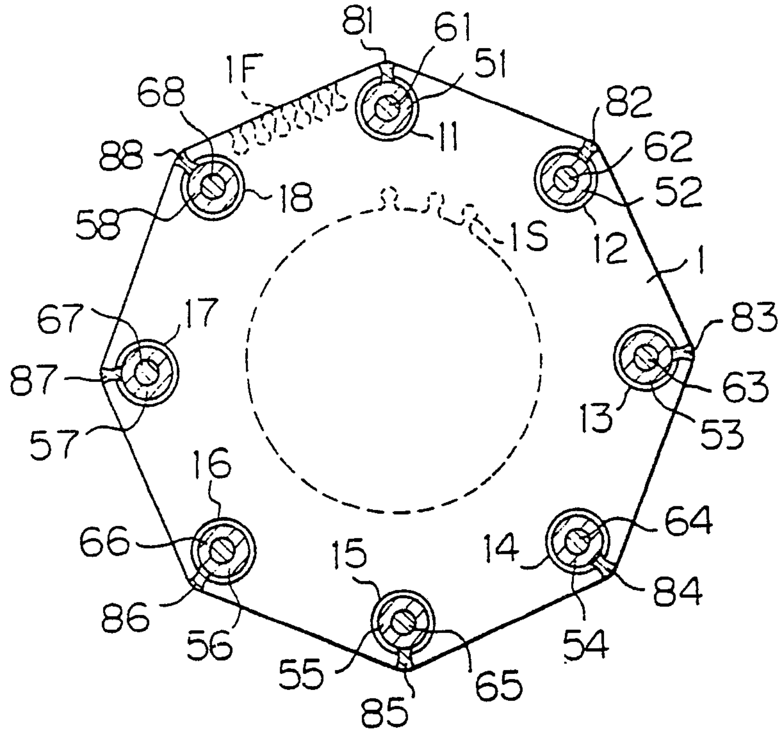
81
61
51
1F
68
82
88
11
62
52
58
18
1S
12
1
67
17
83
87
63
13
53
57
16
64
66
14
15
84
86
56
54
55
65
85

Fig. 3

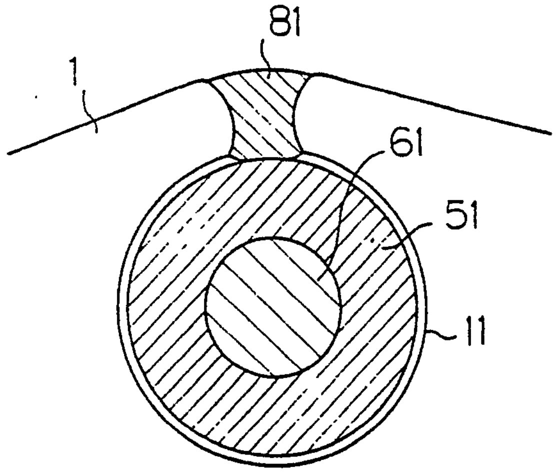
81
1
61
51
11

*Fig. 4*

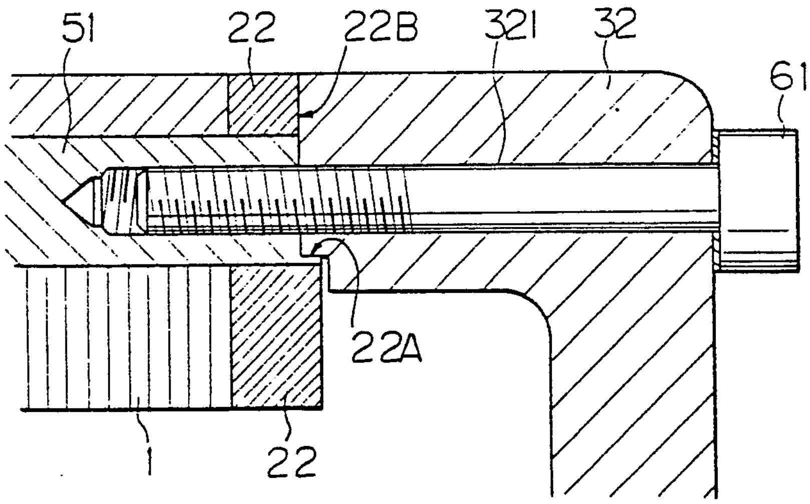


*Fig. 5*